# EUROPEAN PATENT SPECIFICATION

(11) **EP 3 665 069 B1**
(45) Date of publication and mention of the grant of the patent: **28.09.2022**
(21) Application number: 17921000.0
(22) Date of filing: 08.08.2017
(51) Int. Cl.: B62D 25/04, B60R 13/04

(54) **VEHICLE WITH A FRONT PILLAR ASSEMBLY**
FAHRZEUG MIT FRONTSÄULENANORDNUNG
VÉHICULE DOTÉ D'UN ENSEMBLE MONTANT AVANT

(43) Date of publication of application: 17.06.2020
(73) Proprietor: PSA Automobiles SA, 78300 Poissy (FR)
(72) Inventor: LI, Xiucheng, Shanghai 200233 (CN); WU, Yunzhu, Shanghai 200233 (CN); ZHANG, Chundong, Shanghai 200233 (CN); BOUTEILLER, Bertrand, Vélizy-Villacoublay Cedex (FR); WU, Luofei, Shanghai 200 233 (CN)
(86) International application number: PCT/CN2017/096414
(87) International publication number: WO 2019/028674

(56) References cited:
- CN-U- 201 800 786
- CN-U- 202 186 343
- CN-U- 205 769 589
- CN-U- 206 125 178
- CN-U- 206 297 620
- FR-B1- 2 899 521
- JP-A- 2006 082 609
- JP-A- 2016 137 782
- US-A1- 2004 117 951
- US-A1- 2007 126 215

## Description

The invention is directed to the field of passenger vehicles and more particularly to the arrangement of the front pillar between the windshield and the side window.

Document FR 2 899 521 B1 discloses a passenger vehicle with a front windshield, a side window and a pillar assembly between the windshield and the window. This pillar assembly is usually referred to as A-pillar. The pillar assembly comprises a pillar 12 supporting a cover 22. The cover bears the sealing lips 80 and is encompassed in a front finisher 20. The cover is attached to the pillar by means of a row of clips 30. Both lateral edges of the cover are cantilevered with respect to the clip attachment.

This arrangement has shown to be noisy, partly because the cover's lateral extremities can rotate or bend away, creating therefore a gap where air can penetrate. There is also a risk of leakage of air or water.

In addition documents 2006 082609 A, which discloses a passenger vehicle according to the preamble of claim 1, and JP 2016 137782 A are known from the prior art.

The invention has for technical problem to provide a solution to at least one shortcoming of the above mentioned prior art. More specifically, the invention has for technical problem to provide an attachment of the cover to the pillar which holds more firmly the cover and reduces the wind noise or the risk of leakage.

The invention is directed to a passenger vehicle comprising a front windshield, a side window adjacent the windshield and a car body pillar assembly between the windshield and the side window, the pillar assembly, comprising: a supporting pillar; a cover attached on the pillar; wherein the cover is attached to the pillar by means of two rows of clips, arranged in a staggered pattern. By providing two rows of clips in a staggered pattern, the cover is more rigidly attached to the pillar.

According to a preferred embodiment of the invention in a row of clips, the distance between two successive clips is equal or less than 190 mm. This will avoid any deformation of the cover along its longitudinal direction.

According to a preferred embodiment of the invention the cover has two opposite ends and at least a clip of a row is positioned at less than 80 mm from one of the ends, preferably less than 50 mm, more preferably equal or less than 47.5 mm. This ensures that the attachment at the bottom or at the top of the windshield is secured and no air can penetrate through there.

According to a preferred embodiment of the invention a semi-closed cell foam is provided in the pillar where the clips penetrate the pillar to seal the clips.

According to a preferred embodiment of the invention the compress ratio of the foam is equal or greater than 50%.

According to the invention two rows of ribs arranged in a staggered pattern are provided on the side of the cover facing the supporting pillar. The ribs help to further avoid the air from penetrating or circulating through the concave side of the cover.

According to a preferred embodiment of the invention the ribs of one of the rows have a L-shape and/or the ribs of the other of the rows have a triangular shape.

According to a preferred embodiment of the invention the ribs are distanced from the windshield of at least 3 mm in the direction perpendicular to the windshield and of at least 10 mm in the direction parallel to the windshield at the edge of the windshield. This makes it possible to easily mount the cover once the windshield is already positioned on the car body.

According to a preferred embodiment of the invention the vehicle further comprises a first lip attached to a side of the cover and being in contact with the windshield, a second lip attached to the other side of the cover and being in contact with the pillar, and a U-shaped front finisher having a central portion in contact with the cover and two extreme portions in contact with the sealing lips.

According to a preferred embodiment of the invention the relative position of the lips on the windshield/pillar is such that the lips are bent away from the cover, the first lip being bent of between 2 and 2.2 mm and the second lip being bent of between 0.8 and 1.2 mm, measured in a perpendicular direction to the contact area of the respective lips with the windshield / pillar. To ensure that the air does not penetrate in the vehicle, the sealing lips must be pressed against the pillar (or the window) and the windshield. The normal shape of the sealing lips is such that when the cover is mounted on the pillar, the lips are bent away from the cover. This deformation can be measured as an interference or a displacement of the tip of the lip in the direction perpendicular to the windshield or pillar. An interference of about 2.1 mm with the windshield and about 1 mm with the pillar gives the best compromise between the noise reduction and the lifetime of the lips which could be impacted in case of a too important deformation.

The invention will be described more in details in relation with the following figures:
- Figure 1 illustrates a passenger vehicle according to the invention;
- Figure 2 shows a cross section of the pillar assembly;
- Figure 3 is an isometric view of the cover;
- Figures 4 and 5 show the opposite ends of the cover;
- Figures 6 and 7 show cross sections of the pillar assembly.

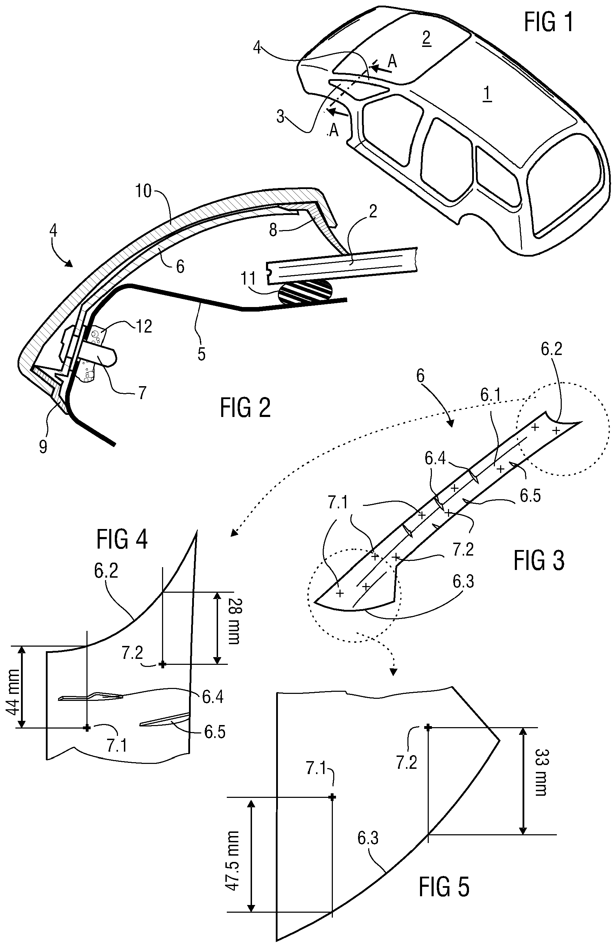

Figure 1 shows a passenger vehicle 1 with a front windshield 2 and a front side window 3. The windshield 2 and the window 3 are both supported on a pillar assembly 4. The pillar assembly 4 is described in more details in the following figures. The cross-sections of figures 2, 6 and 7 are made in the direction indicated as A on figure 1.

Figure 2 is a cross section of the pillar assembly 4. The pillar assembly 4 comprises a pillar 5 of the car structure. Only part of the external metal sheet of the pillar 5 is represented on the figures. A cover 6 is attached to the pillar 5 by means of clips 7. Sealing lips 8, 9 are provided on both lateral sides of the cover. One lip 8 contacts the windshield 2. The other lip 9 can contact the side window or the pillar 5. The cover 6 can be further provided with a cover finisher 10 encompassing the cover 6 and the sealing lips 8, 9. The finisher 10 has a U-shape which encapsulates the cover 6 and the sealing lips 8, 9. Glue 11 can be used to attach the windshield 2 to the pillar 5.

The cross-section of figure 2 only represents one clip 7 of one row. The second row of clips is not visible since the second row is staggered with respect to the first row.

Foam 12, preferably semi-closed cell foam can be provided to further secure the sealing and the attachment of the clip 7 to the pillar 5.

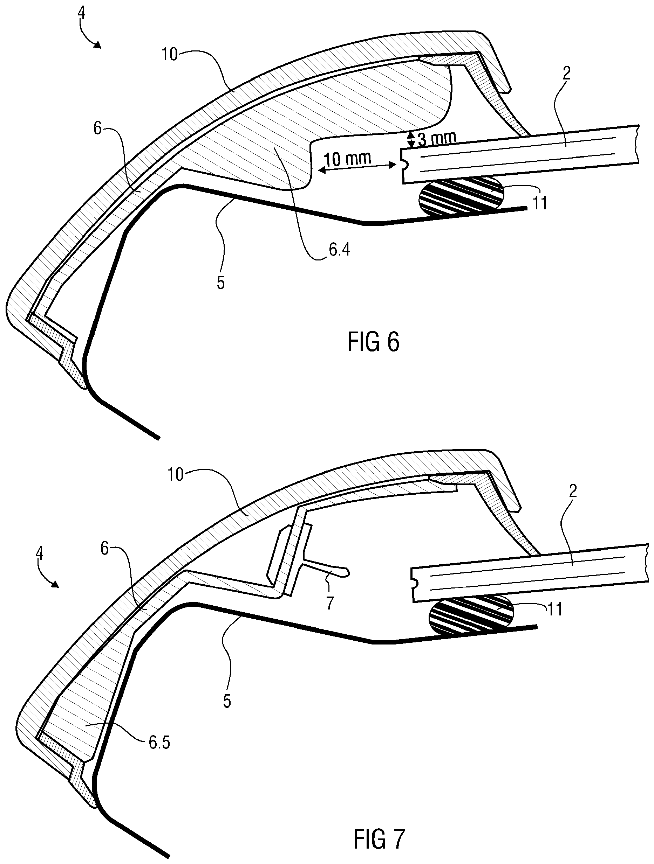

Figure 3 represents this staggered pattern schematically where the crosses mark an example of the possible positions of the clips. The cover 6 is an elongated concave form. The clips 7 are inserted into protrusions protruding on the concave side of the cover 6. Such protrusions can be deformations of the cover itself as can be seen on figures 2 and 7 at the location where the clip is inserted into the cover 6. The clips 7 are positioned in two rows 7.1, 7.2 forming a staggered pattern. The cover has two opposite ends 6.2, 6.3. The positions of the clips are given in example on figure 3. Details of the position of the clips at these ends 6.2, 6.3 are given on figures 4 and 5. The cover 6 is further provided with ribs 6.4, 6.5. The ribs 6.4, 6.5 can reinforce the rigidity of the cover 6 and can also improve the noise insulation of the car by preventing air from freely flowing along the concave surface 6.1 of the cover 6. The ribs 6.4, 6.5 are shown in more details on figures 6 and 7. The ribs are also positioned in a staggered pattern.

Figure 4 represents the top end 6.2 (at the top of the windshield) of the cover 6. The positions of the clips are materialized by crosses noted 7.1 and 7.2. The clips are positioned in the vicinity of the cover end 6.2. Measured along the longitudinal direction of the cover 6, one of the clip is at 28 mm from the edge and the other is at 44 mm from the edge of the cover.

Figure 5 represents the bottom end 6.3 (at the bottom of the windshield) of the cover 6. The positions of the clips are materialized by crosses noted 7.1 and 7.2. The clips are positioned in the vicinity of the cover end 6.3. Measured along the longitudinal direction of the cover 6, one of the clip is at 33 mm from the edge and the other is at 47.5 mm from the edge of the cover.

Figure 6 illustrates a cross section of the pillar assembly 4 in a point of the cover 6 where a rib 6.4 is provided. The rib is L-shaped and is such that a gap between the rib and the windshield in two directions is achieved. In the direction perpendicular to the plane of the windshield, the gap is of about 3 mm. In the direction tangential to the windshield, the gap is of about 10 mm.

Figure 7 illustrates a cross section of the pillar assembly 4 in a point of the cover 6 where a rib 6.5 is provided. The shape of the rib 6.5 is triangular.

## Claims

1. Passenger vehicle (1) comprising a front windshield (2), a side window (3) adjacent the windshield and a car body pillar assembly (4) between the windshield (2) and the side window (3), the pillar assembly (4), comprising:
- a supporting pillar (5);
- a cover (6) attached on the pillar (5);
wherein the cover (6) is attached to the pillar (5) by means of two rows (7.1, 7.2) of clips (7), arranged in a staggered pattern
**characterized in that**
two rows of ribs (6.4, 6.5) arranged in a staggered pattern are provided on the side (6.1) of the cover (6) facing the supporting pillar (5).

2. Vehicle according to claim 1, **characterized in that** in a row of clips (7.1, 7.2), the distance between two successive clips (7) is equal or less than 190 mm.

3. Vehicle according to claim 1 or 2, **characterized in that** the cover has two opposite ends (6.2, 6.3) and at least a clip (7) of a row (7.1, 7.2) is positioned at less than 80 mm from one of the ends (6.2, 6.3), preferably less than 50 mm, more preferably equal or less than 47.5 mm.

4. Vehicle according to any of claims 1 to 3, **characterized in that** a semi-closed cells foam (12) is provided in the pillar (5) where the clips (7) penetrate the pillar (5) to seal the clips (7).

5. Vehicle according to claim 4, **characterized in that** the compress ratio of the foam (12) is equal or greater than 50%.

6. Vehicle according to claim 1, **characterized in that** the ribs (6.4, 6.5) of one of the rows have a L-shape and/or the ribs of the other of the rows have a triangular shape.

7. Vehicle according to claim 1 or 6, **characterized in that** the ribs (6.4, 6.5) are distanced from the windshield (2) of at least 3 mm in the direction perpendicular to the windshield (2) and of at least 10 mm in the direction parallel to the windshield (2) at the edge of the windshield (2).

8. Vehicle according to any of claims 1 to7, **characterized in that** it further comprises a first lip (8) attached to a side of the cover (6) and being in contact with the windshield (2), a second lip (9) attached to the other side of the cover (6) and being in contact with the pillar (5), and a U-shaped front finisher (10) having a central portion in contact with the cover and two extreme portions in contact with the sealing lips (8, 9).

9. Vehicle according to claim 8, **characterized in that** the relative position of the lips (8, 9) on the windshield (2) / pillar (5) is such that the lips (8, 9) are bent away from the cover, the first lip (8) being bent of between 2 and 2.2 mm and the second lip (9) being bent of between 0.8 and 1.2 mm, measured in a perpendicular direction to the contact area of the respective lips (8, 9) with the windshield (2) / pillar (5).

## Patentansprüche

1. Fahrgastfahrzeug (1), bestehend aus einer vorderen Windschutzscheibe (2), einem Seitenfenster (3), das an die Windschutzscheibe angrenzt, und einer Karosserieeinheit (4) zwischen der Windschutzscheibe (2) und dem Seitenfenster (3), der Säulenanordnung (4), bestehend aus:
- Stützpfeiler (5);
- eine Abdeckung (6) auf der Säule (5);
wobei die Abdeckung (6) durch zwei Reihen (7.1, 7.2) der Clips (7) in gestaffeltem Muster an der Säule (5) befestigt ist
gekennzeichnet sind
zwei Reihen Rippen (6.4, 6.5) in gestaffeltem Muster sind auf der Seite (6.1) der Abdeckung (6) gegenüber der Stützsäule (5) vorhanden.

2. Fahrzeug nach Angabe 1, gekennzeichnet in einer Reihe von Clips (7.1, 7.2), ist der Abstand zwischen zwei aufeinander folgenden Clips (7) gleich oder kleiner als 190 mm.

3. Fahrzeug nach Angabe 1 oder 2, das sich dadurch auszeichnet, dass die Abdeckung zwei gegensätzliche Enden (6.2, 6.3) hat und mindestens eine Klammer (7.1, 7.2) in einer Reihe von weniger als 80 mm von einem der Enden (6.2, 6.3), vorzugsweise weniger als 50 mm, vorzugsweise kleiner als 47.5 mm, angebracht ist.

4. Fahrzeug gemäß den Angaben 1 bis 3, das **dadurch gekennzeichnet ist, dass** in der Säule (5) ein halbgeschlossener Zellschaum (12) vorhanden ist, in dem die Klammern (7) die Säule (5) durchdringen, um die Klammern zu versiegeln (7).

5. Fahrzeug nach Angabe 4, das **dadurch gekennzeichnet ist, dass** das Verdichtungsverhältnis des Schaums (12) mindestens 50 % beträgt.

6. Fahrzeug nach Angabe 1, das **dadurch gekennzeichnet ist, dass** die Rippen (6.4, 6.5) einer der Reihen eine L-Form haben und/oder die Rippen der anderen Reihen eine dreieckige Form haben.

7. Fahrzeug nach Angabe 1 oder 6, das **dadurch gekennzeichnet ist, dass** die Rippen (6.4, 6.5) von der Windschutzscheibe (2) in mindestens 3 mm rechtwinkliger Richtung zur Windschutzscheibe (2) und in mindestens 10 mm paralleler Richtung zur Windschutzscheibe (2) an der Kante der Windschutzscheibe (2) entfernt sind.

8. Fahrzeug nach den Angaben 1 bis 7, das sich dadurch auszeichnet, dass es zusätzlich eine erste Lippe (8) an einer Seite des Deckels (6), in Berührung mit der Windschutzscheibe (2), eine zweite Lippe (9) an der anderen Seite des Deckels (6) und in Kontakt mit der Säule (5) steht, und einen U-förmigen vorderen Fertiger (10) mit einem zentralen Teil, der mit der Abdeckung und zwei Extrembereichen in Berührung kommt in Kontakt mit den Versiegelungslippen (8, 9).

9. Fahrzeug nach Angabe 8, das **dadurch gekennzeichnet ist, dass** die Lippen (8, 9) auf der Windschutzscheibe (2)/Säule (5) in der relativen Lage sind, dass die Lippen (8, 9) vom Deckel abgebogen sind, wobei die erste Lippe (8) zwischen 2 und 2,2 mm gebogen ist und die zweite Lippe (9) zwischen 0,8 mm und 1,2 mm gebogen ist, gemessen in einer rechten Richtung zum Berührungsbereich der Lippe Lippen (8, 9) mit der Windschutzscheibe (2) / Säule (5).

## Revendications

1. Véhicule de tourisme (1) comprenant un pare-brise avant (2), une fenêtre latérale (3) adjacente au pare-brise et un ensemble de piliers de carrosserie (4) entre le pare-brise (2) et la fenêtre latérale (3), l'ensemble de piliers (4), comprenant:
- un pilier de soutien (5);
- une couverture (6) fixée sur le pilier (5);
dans laquelle le couvercle (6) est fixé au pilier (5) au moyen de deux rangées (7.1, 7.2) de clips (7), disposées en décalages
**caractérisé par**
deux rangées de côtes (6.4, 6.5) disposées en décalages sont fournies sur le côté (6.1) de la couverture (6) face à la colonne de soutien (5).

2. Véhicule selon la revendication 1, **caractérisé en ce que** dans une rangée de clips (7.1, 7.2), la distance entre deux clips successifs (7) est égale ou inférieure à 190 mm.

3. Véhicule selon la revendication 1 ou 2, **caractérisé en ce que** le couvercle a deux extrémités opposées (6.2, 6.3) et au moins un clip (7) d'une rangée (7.1, 7.2) est positionné à moins de 80 mm de l'une des extrémités (6.2, 6.3), de préférence moins de 50 mm, de préférence plus ou moins 47.5 mm.

4. Véhicule selon l'une des revendications 1 à 3, **caractérisé en ce qu'**une mousse de cellules semifermées (12) est fournie dans le pilier (5) où les clips (7) pénètrent le pilier (5) pour sceller les clips (7).

5. Véhicule selon la revendication 4, **caractérisé en ce que** le rapport de compression de la mousse (12) est égal ou supérieur à 50%.

6. Véhicule selon la revendication 1, **caractérisé en ce que** les côtes (6.4, 6.5) de l'une des lignes ont une forme L et/ou les côtes de l'autre des lignes ont une forme triangulaire.

7. Véhicule selon la revendication 1 ou 6, **caractérisé en ce que** les côtes (6.4, 6.5) sont distancées du pare-brise (2) d'au moins 3 mm dans la direction perpendiculaire au pare-brise (2) et d'au moins 10 mm dans la direction parallèle au pare-brise (2) au bord du pare-brise (2).

8. Véhicule selon l'une des revendications 1 à 7, **caractérisé en ce qu'**il comprend en outre une première lèvre (8) fixée sur un côté de la couverture (6) et en contact avec le pare-brise (2), une deuxième lèvre (9) fixée à l'autre côté de la couverture (6) et en contact avec le pilier (5), et un finisseur avant en forme de U (10) ayant une partie centrale en contact avec la couverture et deux parties extrêmes contact avec les lèvres d'étanchéité (8, 9).

9. Véhicule selon la revendication 8, **caractérisé en ce que** la position relative des lèvres (8, 9) sur le pare-brise (2) / le pilier (5) est telle que les lèvres (8, 9) sont dépliées de la couverture, la première lèvre (8) étant courbée de 2 à 2,2 mm et la deuxième lèvre (9) étant courbée de 0,8 à 1,2 mm, mesurée dans une direction perpendiculaire à la zone de contact des lèvres respectives (8, 9) avec le pare-brise (2) / le pilier (5).
